(19) Europäisches Patentamt / European Patent Office / Office européen des brevets

(11) **EP 3 281 735 A1**

(12) **EUROPEAN PATENT APPLICATION**

(43) Date of publication:
14.02.2018 Bulletin 2018/07

(51) Int Cl.:
*B23H 7/02* (2006.01)      *B23H 7/20* (2006.01)
*G05B 19/401* (2006.01)

(21) Application number: 17001264.5

(22) Date of filing: 24.07.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 25.07.2016 JP 2016145351

(71) Applicant: **FANUC CORPORATION**
**Oshino-mura**
**Minamitsuru-gun**
**Yamanashi 401-0597 (JP)**

(72) Inventor: **Kazuhiko, Murakawa**
**Yamanashi, 401-0597 (JP)**

(74) Representative: **Schmidt, Steffen J.**
**Wuesthoff & Wuesthoff**
**Patentanwälte PartG mbB**
**Schweigerstrasse 2**
**81541 München (DE)**

(54) **WIRE ELECTRICAL DISCHARGE MACHINE AND WIRE ELECTRICAL DISCHARGE MACHINING METHOD**

(57)      A wire electrical discharge machine (10) obtains position error information ($\Delta x$, Ay) indicating a position error in a planar direction (X-Y) in a workpiece (W, W1, W2) placed on a mounting table (14) after relative positions between a first guide unit (20) and a second guide unit (22) are changed, and calculates a position of the workpiece (W, W1, W2) with the corrected position error in the planar direction (X-Y) in a state where a wire electrode (12) is inclined according to an inclined state of the workpiece (W, W1, W2) by using this position error information ($\Delta x$, $\Delta y$).

FIG. 4

**Description**

BACKGROUND OF THE INVENTION

Field of the Invention:

The present invention relates to a wire electrical discharge machine and wire electrical discharge machining method for performing electrical discharge machining on a workpiece by generating electric discharge between a wire electrode and the workpiece.

Description of the Related Art:

Conventionally, there have been developed wire electrical discharge machines that perform electrical discharge machining on a workpiece by generating electric discharge between a wire electrode and the workpiece. In this field, there has been proposed a machining technique that compensates for or corrects errors when a tilt error of the workpiece relative to the mount surface has occurred due to adhesion of sludge or the like.
Japanese Laid-Open Patent Publication No. 2006-159396 has disclosed an apparatus and method having a so-called "inclination correction function" whereby the relative position of a pair of wire guides is adjusted so as to stretch the wire electrode parallel to the inclination of the workpiece surface, regarding the adjusted positions as being vertical. Use of this inclination correction function makes it possible to reduce angular errors of the machining target surface and distortion errors of the machining target shape.

SUMMARY OF THE INVENTION

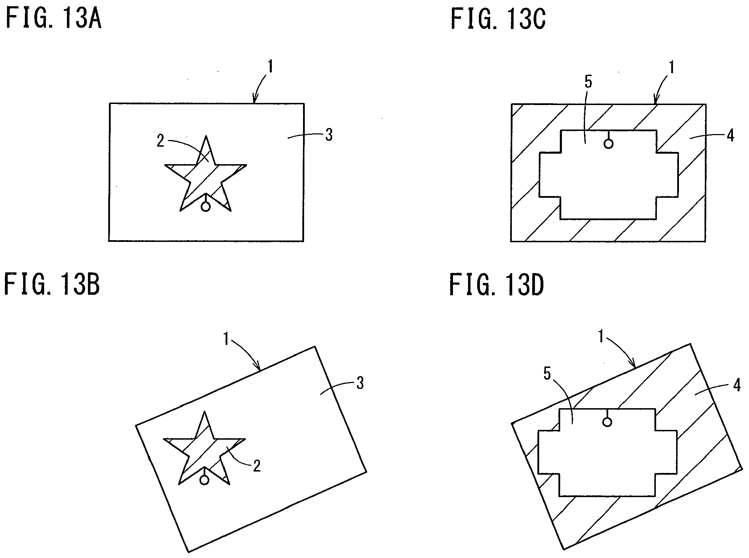

It is assumed that, as illustrated in FIG. 13A, a machined product 2 that has an outer shape of a star shape when seen in a plan view is produced from a workpiece 1 having a right-angled parallelepiped shape. FIG. 13A shows a result obtained by performing electrical discharge machining on the workpiece 1 placed at an ideal position and posture. A residual portion 3 corresponds to a rest of a portion obtained by cutting out the machined product 2 from the workpiece 1.
FIG. 13B is a view showing a result obtained by performing electrical discharge machining on the workpiece 1 placed inclining in a planar direction and about the normal direction. When the above inclination correcting function is used, an angle error in a machining target surface and a distortion error in a machining target shape are reduced, so that it is possible to obtain the desired machined product 2.
It is assumed that, as illustrated in FIG. 13C, a machined product 4 that has an inner shape of a cross shape when seen in a plan view is made from the workpiece 1 having the right-angled parallelepiped shape. FIG. 13C shows a result obtained by performing electrical discharge machining on the workpiece 1 placed at an ideal position and posture. The residual portion 5 corresponds to a rest of a portion cut out from the workpiece 1.
FIG. 13D is a view showing a result obtained by performing electrical discharge machining on the workpiece 1 placed inclining in the planar direction and about the normal direction. When the above inclination correcting function is used, even though the inner shape is appropriate, a machining position is displaced, and therefore it is not possible to obtain the desired machined product 4.
Therefore, it becomes additionally necessary to provide a mechanism and an operation that adjust misalignment when a workpiece is placed. Therefore, there is a problem that a great amount of time is required for such preparation. That is, there is still plenty room for improvement from a viewpoint of improving both machine accuracy and operation efficiency.
The present invention has been made to solve the above problem, and an object of the present invention is to provide a wire electrical discharge machine and a wire electrical discharge machining method that can both improve efficiency of an arranging operation and maintain machine accuracy for placing a workpiece.
A wire electrical discharge machine according to a first aspect of the present invention is a machine including: a mounting table configured to allow a workpiece to be placed on a placement plane; and a first guide unit and a second guide unit configured to allow a wire electrode to be stretched therebetween and support the wire electrode, and configured to perform electrical discharge machining on the workpiece in a state where the wire electrode is inclined with respect to the placement plane by changing relative positions between the first guide unit and the second guide unit, and includes: an error information obtaining unit configured to obtain position error information indicating a position error in a planar direction in the workpiece placed on the mounting table after the relative positions between the first guide unit and the second guide unit are changed when a three-axis coordinate system formed by the planar direction corresponding to the placement plane and a normal direction of the placement plane is defined; and a workpiece position calculating unit configured to calculate a position of the workpiece with the corrected position error in the planar direction in a state where the wire electrode is inclined according to an inclined state of the workpiece by using the position error information obtained by the error information obtaining unit.

Thus, the position of the workpiece with the corrected position error in the planar direction is calculated by using the position error information indicating the position error in the planar direction in the workpiece after the relative positions between the first guide unit and the second guide unit are changed. Consequently, it is possible to additionally correct the position error in the planar direction in a state where the inclination error in the planar direction is reduced in advance, further enhance a placement error reduction effect and simplify an arrangement operation. Consequently, it is possible to both improve efficiency of the arrangement operation and maintain machine accuracy for placing the workpiece.

In the wire electrical discharge machine according to the first aspect of the present invention, the error information obtaining unit may be configured to further obtain rotation error information indicating a rotation error around the normal direction in the workpiece placed on the mounting table after the relative positions between the first guide unit and the second guide unit are changed, and the workpiece position calculating unit may be configured to calculate the position of the workpiece with the corrected rotation error around the normal direction by further using the rotation error position information obtained by the error information obtaining unit. Further, it is possible to perform correction while taking into account the rotation error around the normal direction.

In the wire electrical discharge machine according to the first aspect of the present invention, the error information obtaining unit may be configured to calculate and obtain the position error information and the rotation error information by using positions of three points on two adjacent side surfaces of the workpiece of a right-angled parallelepiped shape.

In the wire electrical discharge machine according to the first aspect of the present invention, the error position obtaining unit may be configured to calculate and obtain the position error information and the rotation error information by using the positions of two points and a position of one point, wherein the two points are on one side surface of the workpiece of a right-angled parallelepiped shape and the one point indicates a center of a through-hole formed in a principal surface of the workpiece.

The wire electrical discharge machine according to the first aspect of the present invention may further include a correction necessity setting unit configured to set whether or not to correct the position error in the planar direction and the rotation error around the normal direction according to an input operation of an operator, and the workpiece position calculating unit may be configured to calculate the position of the workpiece by or without correcting the position of the workpiece according to the setting made by the correction necessity setting unit. Consequently, it is possible to perform electrical discharge machining while reflecting an operator's intention on whether or not correction is necessary.

A wire electrical discharging method according to a second aspect of the present invention is a method of a wire electrical discharge machine including: a mounting table configured to allow a workpiece to be placed on a placement plane; and a first guide unit and a second guide unit configured to allow a wire electrode to be stretched therebetween and support the wire electrode, and configured to perform electrical discharge machining on the workpiece in a state where the wire electrode is inclined with respect to the placement plane by changing relative positions between the first guide unit and the second guide unit, and includes: an obtaining step of obtaining position error information indicating a position error in a planar direction in the workpiece placed on the mounting table after the relative positions between the first guide unit and the second guide unit are changed when a three-axis coordinate system formed by the planar direction corresponding to the placement plane and a normal direction of the placement plane is defined; and a calculating step of calculating a position of the workpiece with the corrected position error in the planar direction in a state where the wire electrode is inclined according to an inclined state of the workpiece by using the obtained position error information.

According to the wire electrical discharge machining method according to the second aspect of the present invention, in the obtaining step, rotation error information may be further obtained, wherein the rotation error information indicates a rotation error around the normal direction in the workpiece placed on the mounting table after the relative positions between the first guide unit and the second guide unit are changed, and, in the calculating step, the position of the workpiece with the corrected rotation error around the normal direction may be calculated by further using the obtained rotation error position information.

According to the wire electrical discharge machining method according to the second aspect of the present invention, in the obtaining step, the position error information and the rotation error information may be calculated and obtained by using positions of three points on two adjacent side surfaces of the workpiece of a right-angled parallelepiped shape.

According to the wire electrical discharge machining method according to the second aspect of the present invention, in the obtaining step, the position error information and the rotation error information may be calculated and obtained by using the positions of two points and a position of one point, wherein the two points are on one side surface of the workpiece of a right-angled parallelepiped shape and the one point indicates a center of a through-hole formed in a principal surface of the workpiece.

The wire electrical discharge machining method according to the second aspect of the present invention may further include a setting step of setting whether or not to correct the position error in the planar direction and the rotation error around the normal direction according to an input operation of an operator, and, in the calculating step, the position of the workpiece may be calculated by or without correcting the position of the workpiece according to the setting made in the setting step.

Consequently, the wire electrical discharge machine and the wire electrical discharging method according to the present invention can both improve efficiency of the arrangement operation and maintain machine accuracy for placing the workpiece.

The above and other objects features and advantages of the present invention will become more apparent from the following description when taken in conjunction with the accompanying drawings in which a preferred embodiment of the present invention is shown by way of illustrative example.

BRIEF DESCRIPTION OF THE DRAWINGS

FIG. 1 is a schematic configuration diagram of a wire electrical discharge machine according to one embodiment of the present invention;

FIG. 2 is a view showing an occurrence model of a workpiece placement error;

FIG. 3 is a schematic view showing a position error of a workpiece in an XY plane;

FIG. 4 is a schematic view showing a rotation error of the workpiece around a Z axis;

FIG. 5 is a schematic view showing an inclination error of the workpiece in an X'Y' plane;

FIG. 6 is a flowchart related to a first operation of the wire electrical discharge machine that performs a workpiece placement error correcting function;

FIG. 7 is a view showing measurement portions of the workpiece in a measuring process (step S2) in FIG. 6;

FIG. 8 is a flowchart related to a second operation of the wire electrical discharge machine that performs the workpiece placement error correcting function;

FIG. 9 is a view showing measurement portions of the workpiece in the measuring process (step S2 in FIG. 6) according to a first modification;

FIG. 10 is a view showing a method for calculating a position error in the XY plane and a rotation error about the Z axis;

FIG. 11 is a view showing measurement portions of the workpiece in the measuring process (step S2 in FIG. 6) according to a second modification;

FIG. 12 is a view showing a method for calculating a position error in the XY plane and a rotation error about the Z axis; and

FIGS. 13A to 13D are views showing results obtained by performing electrical discharge machining on the placed workpiece.

DESCRIPTION OF THE PREFERRED EMBODIMENTS

Referring now to the accompanying drawings, the wire electrical discharge machines according to the present invention will be explained in detail by describing preferred embodiments in relation with wire electrical discharge machining methods.

[Overall Structure of Wire Electrical Discharge Machine 10]

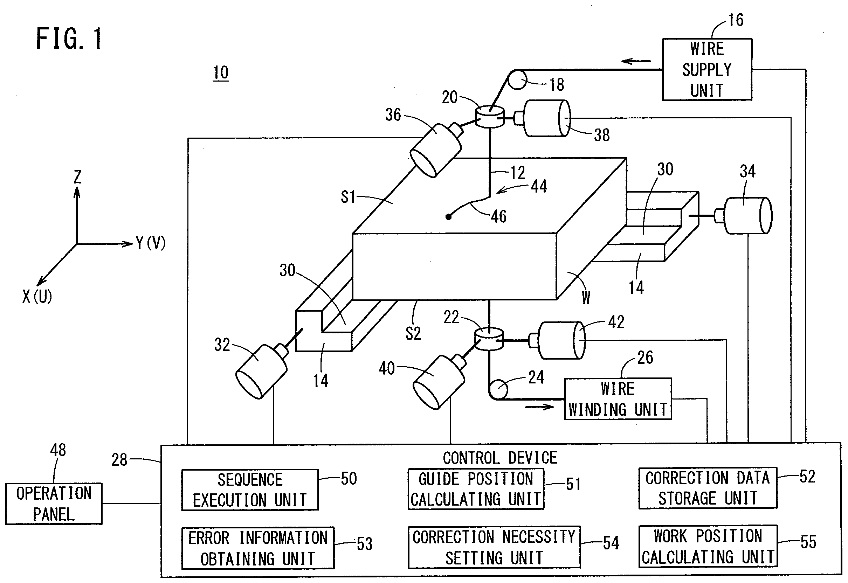

FIG. 1 is a schematic configuration diagram of a wire electrical discharge machine 10 according to one embodiment of the present invention. The wire electrical discharge machine 10 is a machine tool which operates in accordance with a predetermined machining program and performs electrical discharge machining on a workpiece W by electric discharge generated between a wire electrode 12 and the workpiece W. The wire electrode 12 is formed of, for example, metal material such as tungsten-based, copper alloy-based and brass-based material. On the other hand, the material of the workpiece W is, for example, iron-based material or superhard material.

The wire electrical discharge machine 10 is configured to include a mounting table 14 on which the workpiece W can be placed; a wire supply unit 16 that supplies the wire electrode 12; an upper guide unit 20 (first guide unit) and a lower guide unit 22 (second guide unit) that allow the wire electrode 12 fed via a guide roller 18 to be stretched therebetween and guide the wire electrode 12; a wire winding unit 26 that winds the wire electrode 12 via the lower guide unit 22 and a guide roller 24; and a control device 28 that controls each unit.

The mounting table 14 is formed in an L shape when seen from a plan view, and has a placement plane 30 of high-precision flatness. When a rectangular parallelepiped workpiece W is mounted, the workpiece W is fixed on the mounting table 14 so that the undersurface, designated at S2, which is parallel to the top surface, designated at S1, contacts the placement plane 30. The mounting table 14 is disposed in a work tank (not shown) capable of storing a working fluid used for electrical discharge machining.

The mounting table 14 is provided with an X-axis driving mechanism 32 and a Y-axis driving mechanism 34, which are drive sources such as servo motors. The control device 28 is capable of moving the mounting table 14 in the X-axis direction by supplying drive signals to the X-axis driving mechanism 32. The control device 28 can also move the mounting table 14 in the Y-axis direction by supplying drive signals to the Y-axis driving mechanism 34.

The upper guide unit 20 includes a U axis driving mechanism 36 and a V axis driving mechanism 38 which are driving sources such as servo motors. The control device 28 can move the upper guide unit 20 in a U axis direction by supplying a drive signal to the U axis driving mechanism 36. The control device 28 can move the upper guide unit 20 in a V axis direction by supplying a drive signal to the V axis driving mechanism 38.

Here, the three-axis coordinate system formed by X-, Y- and Z-axes is defined by the plane (XY plane) corresponding to the placement plane 30 and the direction (Z-axis direction) normal to the placement plane 30, and is a machine coordinate system unique to the wire electrical discharge machine 10. The two-axis coordinate system formed by the U- and V-axes is parallel to the XY plane and is a machine coordinate system prepared for angle adjustment during taper machining. An inclination correcting function described below is performed by moving the upper guide unit 20 independently from the lower guide unit 22. The following description will be made on the assumption that the X-axis and the U-axis (Y-axis and V-axis) coincide with each other. However, a coordinate system in which these axes do not coincide may be defined.

The lower guide unit 22 includes an X axis driving mechanism 40 and a Y axis driving mechanism 42 composed of driving sources such as servo motors. The control device 28 can move the lower guide unit 22 in the X axis direction by supplying a drive signal to the X axis driving mechanism 40. The control device 28 can move the lower guide unit 22 in the Y axis direction by supplying a drive signal to the Y axis driving mechanism 42.

That is, the wire electrical discharge machine 10 is configured to use at least one of the X axis driving mechanisms 32, 40, the Y axis driving mechanism 34, 42, the U axis driving mechanism 36 and the V axis driving mechanism 38 to move the workpiece W relative to the wire electrode 12. By relatively moving the workpiece W to the wire electrode 12 with the wire electrode 12 linearly penetrating the workpiece W through a machining target portion 44, a machined groove 46 is formed along a desired machining path.

The control device 28 is includes, for example, a CPU (Central Processing Unit), a CNC (Computerized Numerical Control), an input/output device such as an operation panel 48, a memory and a power supply. The control device 28 performs control of the above driving mechanisms (each of the X-, Y-, Z-, U- and V-axes), control of the power supply for electrical discharge, feeding control of the wire electrode 12, and display control of the operation panel 48. The control device 28 functions as a sequence execution unit 50, a guide position calculating unit 51, a correction data storage unit 52, an error information obtaining unit 53, a correction necessity setting unit 54 and a workpiece position calculating unit 55.

[Occurrence Model of Workpiece Placement Error]

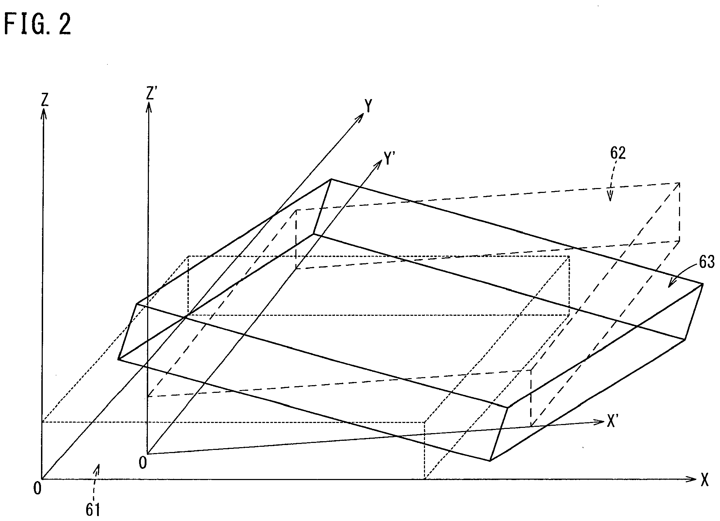

FIG. 2 is a view showing an occurrence model of a workpiece placement error. In FIG. 2, an XYZ coordinate system defined by a machining program, and an X'Y'Z' coordinate system after affine transformation are shown together. This affine transformation is a combination of "parallel movement in the XY planar direction" and "rotation movement about the Z axis".

A first virtual workpiece 61, a second virtual workpiece 62 and a third virtual workpiece 63 each indicate the workpiece W in a virtual space. The first virtual workpiece 61 indicates a state where the workpiece W is ideally placed in the XYZ coordinate system. The second virtual workpiece 62 indicates a state where the workpiece W is ideally placed in the X'Y'Z' coordinate system. The third virtual workpiece 63 indicates a state where the workpiece W is inclined with respect to an X'Y' planar direction in the X'Y'Z' coordinate system.

Hereinafter, it is assumed that the workpiece W is placed at an arbitrary position and posture indicated by the third virtual workpiece 63. In this case, a workpiece placement error of the workpiece W is expressed by a combination of three types of error factors of [1] parallel movement in the XY planar direction, [2] rotation movement about the Z axis and [3] rotation movement about the X axis and the Y axis.

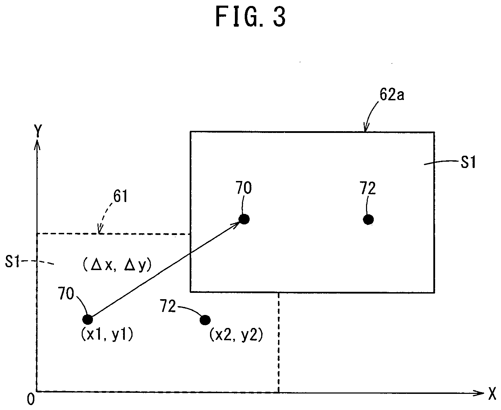

FIG. 3 is a schematic view showing a position error of the workpiece W in the XY plane. More specifically, FIG. 3 corresponds to a plan view of the workpiece W in which two machining start holes 70, 72 (through-holes) penetrating in a thickness direction are formed. The ideal first virtual workpiece 61 is placed in a state where one long side is on the X axis, and one short side is on the Y axis. In this regard, a position of the machining start hole 70 is given as $(x1, y1)$, and a position of the machining start hole 72 is given as $(x2, y2)$ in advance.

It is assumed that the workpiece W is placed in the state indicated by a second virtual workpiece 62a because the position error in the XY plane occurs in an actual case. It is sought here to convert an arbitrary machining point $(x, y)$ defined in the machining program into a machining point $(X, Y)$ while the position error in the XY plane is taken into account. When displacement is $(\Delta x, \Delta y)$, the machining point $(X, Y)$ after the conversion can be expressed by following equation (1).

$$\begin{bmatrix} X \\ Y \end{bmatrix} = \begin{bmatrix} x \\ y \end{bmatrix} + \begin{bmatrix} \triangle x \\ \triangle y \end{bmatrix} \quad \cdots (1)$$

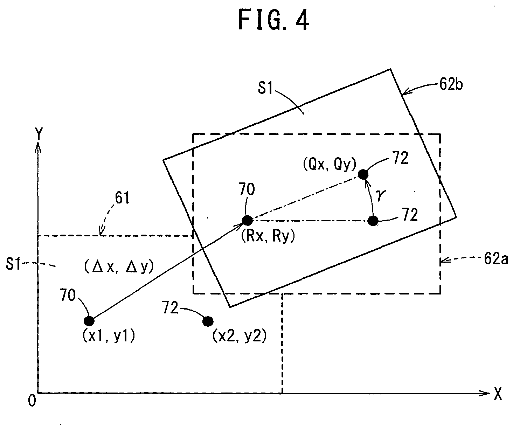

FIG. 4 is a schematic view showing a rotation error of the workpiece W about the Z axis. More specifically, FIG. 4 corresponds to a plan view of the workpiece W in which the two machining start holes 70, 72 are formed. The position of the second virtual workpiece 62a contains the position error in the XY plane compared to the first virtual workpiece 61. It is assumed that the workpiece is placed in the state indicated by the second virtual workpiece 62b because the rotation error about the Z axis occurs in an actual case.

It is sought here to convert the arbitrary machining point (x, y) defined in the machining program into a machining point (X, Y) while the position error in the XY plane and the rotation error about the Z axis are taken into account. When the workpiece W inclines by a rotation angle $\gamma$ about an actual position (Rx, Ry) of the machining start hole 70, the machining point (X, Y) after conversion is expressed by following equation (2).

$$\begin{bmatrix} X \\ Y \end{bmatrix} = \begin{bmatrix} \cos\gamma & -\sin\gamma \\ \sin\gamma & \cos\gamma \end{bmatrix} \begin{bmatrix} x - Rx \\ y - Ry \end{bmatrix} + \begin{bmatrix} Rx \\ Ry \end{bmatrix} \quad \cdots (2)$$

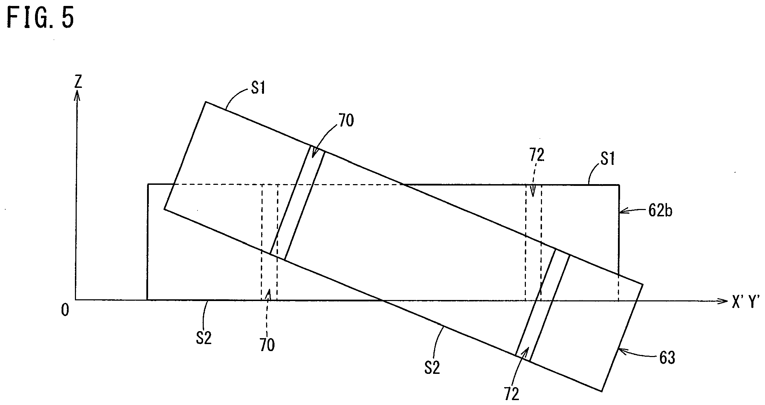

FIG. 5 is a schematic view showing an inclination error of the workpiece W with respect to an X'Y' plane. More specifically, FIG. 5 corresponds to a side view of the workpiece W in which the two machining start holes 70, 72 are formed. A second virtual workpiece 62b (FIG. 4) is placed in a state where one long side is on an X' axis and one short side is on a Y' axis. It is assumed that the workpiece W is placed in the state indicated by the third virtual workpiece 63 because the inclination error with respect to the X'Y' plane occurs in an actual case.

A function (referred to as an "inclination correcting function" below) of correcting an inclination error with respect to a two-axis plane as shown in FIG. 5 has already been known. Hereinafter, a method (referred to as a "workpiece placement error correcting function" below) for correcting a position error in the XY plane and a rotation error about the Z axis by using this inclination correcting function will be proposed.

[First Operation of Wire Electrical Discharge Machine 10]

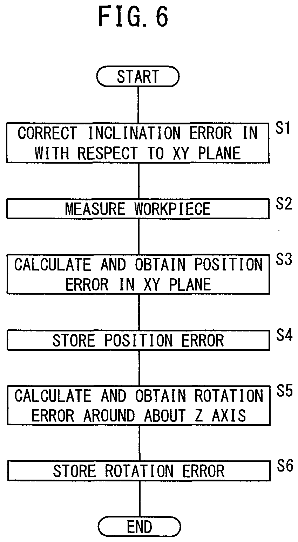

First, the first operation of the wire electrical discharge machine 10 that performs the workpiece placement error correcting function will be described in detail mainly with reference to the flowchart in FIG. 6. In this regard, the first operation means an operation of obtaining error information used for the correction and storing this information in the correction data storage unit 52.

<Inclination Error Correcting Process (Step S1)>

The control device 28 (sequence execution unit 50) performs a series of sequence control for correcting an inclined state of the workpiece W with respect to the XY plane. The guide position calculating unit 51 may calculate relative positions between the upper guide units 20 and the lower guide unit 22 by using a known measuring method disclosed in Japanese Laid-Open Patent Publication No. 2006-159396, for example. The control device 28 moves the upper guide unit 20 in a UV planar direction and/or the lower guide unit 22 in the XY planar direction based on a calculation result of the guide position calculating unit 51. Consequently, it is possible to incline the wire electrode 12 according to the inclined state of the workpiece W. The control device 28 stores the relative positions calculated in step S1 in the correction data storage unit 52.

<Measuring Process (Step S2)>

The control device 28 (sequence execution unit 50) performs a series of sequence control for measuring specific portions of the workpiece W. The workpiece W in which the two machining start holes 70, 72 are formed is used.

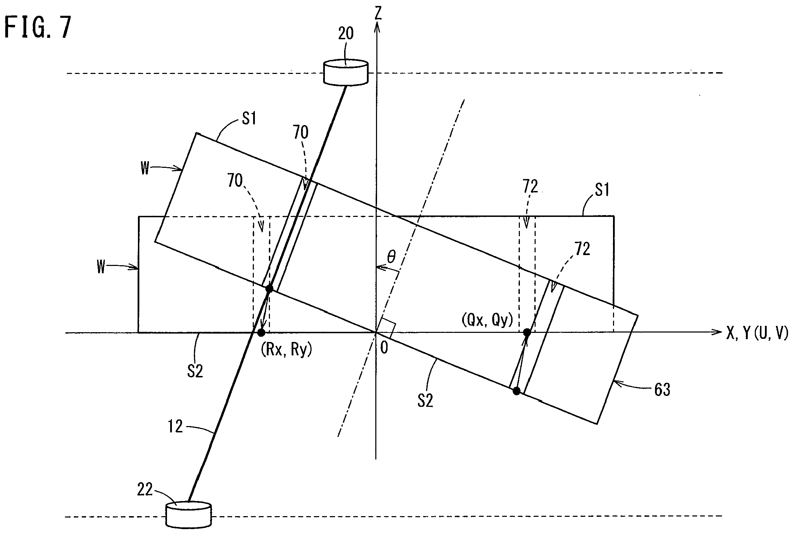

FIG. 7 is a view showing measurement portions of the workpiece W in the measuring process (step S2) in FIG. 6. The measurement portions are two portions of [1] a central point of the machining start hole 70 and [2] a central point of the machining start hole 72. The control device 28 measures an XY coordinate value of the lower guide unit 22 in a state where the wire electrode 12 is inserted in the machining start hole 70. Similarly, the control device 28 measures the XY coordinate value of the lower guide unit 22 in a state where the wire electrode 12 is inserted in the machining start hole 72 of the workpiece W.

It is assumed that as a result of this measurement, the position of the machining start hole 70 in a case where the inclination error (an inclination angle $\theta$) with respect to the XY plane is not taken into account is (Rx, Ry). Similarly, it is assumed that a position of the machining start hole 72 in a case where the inclination error with respect to the XY plane is not taken into account is (Qx, Qy).

<Position Error Obtaining Process (Step S3)>

The control device 28 (error information obtaining unit 53) calculates and obtains information (referred to as position error information below) indicating the position error in the XY plane by using the measurement values obtained in step S2. Displacement ($\Delta$x) in the X axis direction and displacement ($\Delta$y) in the y axis direction are calculated based on above equation (1) according to equations (3) and (4).

$$\Delta x = Rx - x1 \,...\, (3)$$

$$\Delta y = Ry - y1 \,...\, (4)$$

<Position Error Storing Process (Step S4)>

The control device 28 stores the position error information ($\Delta$x, $\Delta$y) obtained in step S3 in the correction data storage unit 52. In a second operation described below, the position error information ($\Delta$x, $\Delta$y) is read from the correction data storage unit 52, and is used to calculate the position of the workpiece W.

<Rotation Error Obtaining Process (Step S5)>

The control device 28 (error information obtaining unit 53) calculates and obtains information (referred to as rotation error information below) indicating a rotation error about the Z axis by using the measurement values obtained in step S2 and the position error information ($\Delta$x, $\Delta$y) stored in step S4. The rotation angle $\gamma$ takes, for example, a value satisfying a relationship according to equation (5).

$$\begin{bmatrix} Qx \\ Qy \end{bmatrix} = \begin{bmatrix} \cos\gamma & -\sin\gamma \\ \sin\gamma & \cos\gamma \end{bmatrix} \begin{bmatrix} x2 + \triangle x - Rx \\ y2 + \triangle y - Ry \end{bmatrix} + \begin{bmatrix} Rx \\ Ry \end{bmatrix} \quad \cdot\cdot\,(5)$$

<Rotation Error Storing Process (Step S6)>

The control device 28 stores the rotation angle $\gamma$ as the rotation error information obtained in step S5, in the correction data storage unit 52. In this way, the wire electrical discharge machine 10 finishes the first operation of performing the workpiece placement error correcting function. In the second operation described below, the rotation angle $\gamma$ is read from the correction data storage unit 52 and is used to calculate the position of the workpiece W.

[Second Operation of Wire Electrical Discharge Machine 10]

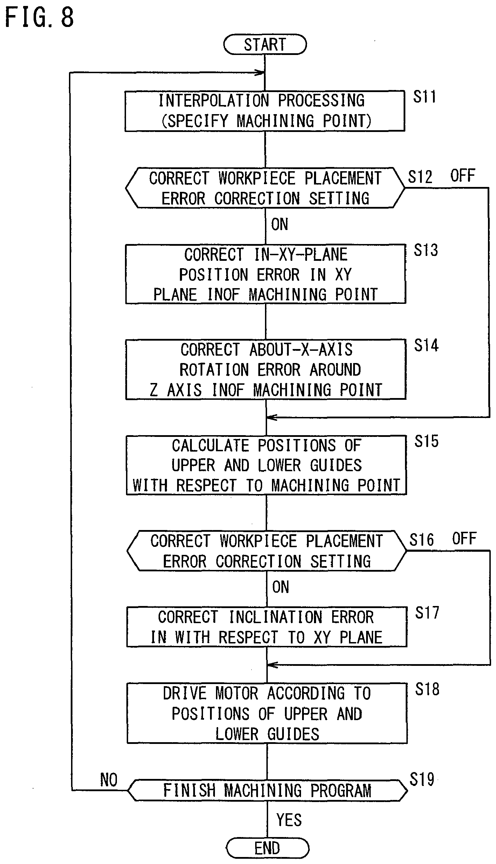

Subsequently, the second operation of the wire electrical discharge machine 10 that performs the workpiece placement error correcting function will be described in detail mainly with reference to the flowchart in FIG. 8. In this regard, the second operation means an operation of performing electrical discharge machining that reduces a workpiece placement error by using the error information obtained by the first operation.

Prior to an automatic operation of the wire electrical discharge machine 10, an operator performs an input operation of activating (ON) or deactivating (OFF) the workpiece placement error correcting function via a GUI (Graphical User Interface) of the operation panel 48. Thus, the correction necessity setting unit 54 selectively sets ON/OFF of the workpiece placement error correcting function.

Thus, the correction necessity setting unit 54 may set whether or not to correct the position error in the XY plane and the rotation error about the Z axis according to the input operation of the operator. The workpiece position calculating unit 55 may calculate the position of the workpiece W by or without correcting the position of the workpiece W according to the setting made by the correction necessity setting unit 54. Consequently, it is possible to perform electrical discharge machining while reflecting an operator's intention as to whether or not correction is necessary.

As shown in FIG. 8, the workpiece position calculating unit 55 analyzes a machining program that is being executed, performs interpolation processing on a surrounding machining route including the machining target portion 44 and specifies a machining point (step S11). The workpiece position calculating unit 55 performs different operations according to setting contents of the correction necessity setting unit 54 (step S12). When the correction setting indicates "ON" (step S12: ON), the workpiece position calculating unit 55 calculates the position of the workpiece W that takes into account the position error in the XY plane (step S13) and the rotation error about the Z axis (step S14), by correcting a position of the specified machining point. Meanwhile, when the correction setting indicates "OFF" (step S12: OFF), the workpiece position calculating unit 55 skips executing steps S13, S14.

The position error in the XY plane is corrected according to a conversion equation of equation (1). The rotation error about the Z axis is corrected according to a conversion equation of equation (2). The guide position calculating unit 51 calculates positions of the upper guide unit 20 and the lower guide unit 22 corresponding to the machining point (step S15).

The workpiece position calculating unit 55 performs different operations according to the setting contents of the correction necessity setting unit 54 (step S16). When the correction setting indicates "ON" (step S16: ON), the workpiece position calculating unit 55 calculates the position of the workpiece W that takes into account the inclination error with respect to the XY plane, by further correcting the position of the machining point (step S17). Meanwhile, when the correction setting indicates "OFF" (step S16: OFF), the workpiece position calculating unit 55 skips executing step S17.

The control device 28 controls each axis driving mechanism according to the positions of the upper guide unit 20 and the lower guide unit 22 (step S18). Consequently, the wire electrical discharge machine 10 can perform desired electrical discharge machining on the workpiece W while relatively moving the wire electrode 12 and the workpiece W.

The control device 28 determines whether or not the machining program that is being executed has been finished (step S19). When the machining program is not yet finished (step S19: NO), the flow returns to step S11 to repeat steps S11 to S19. Meanwhile, when the machining program is finished (step S19: YES), the electrical discharge machining is finished and a machined product is completed.

[Effect of Wire Electrical Discharge Machine 10]

As described above, the wire electrical discharge machine 10 is a machine that includes [1] the mounting table 14 that allows the workpiece W to be placed on the placement plane 30, and [2] the upper guide unit 20 and the lower guide unit 22 that allow the wire electrode 12 to be stretched therebetween and support the wire electrode 12, and [3] that performs electrical discharge machining on the workpiece W in a state where the wire electrode 12 is inclined with respect to the placement plane 30 by changing the relative positions between the upper guide unit 20 and the lower guide unit 22.

Further, the wire electrical discharge machine 10 includes [4] the error information obtaining unit 53 that obtains the position error information ($\triangle$x, $\triangle$y) indicating the position error in the XY planar direction of the workpiece W placed on the mounting table 14 after the relative positions between the upper guide unit 20 and the lower guide unit 22 are changed, when the three-axis coordinate system formed by the planar direction (XY planar direction) corresponding to the placement plane 30 and the normal direction (Z axis) of the placement plane 30 is defined, and [5] the workpiece position calculating unit 55 that calculates the position of the workpiece W after the correction of, by using the obtained position error information ($\triangle$x, $\triangle$y), the position error in the XY planar direction in the state where the wire electrode 12 is inclined according to the inclined state of the workpiece W.

Further, the wire electrical discharge machining method that uses the wire electrical discharge machine 10 includes [1] an obtaining process (step S3 in FIG. 6) of obtaining the position error information ($\triangle$x, $\triangle$y) indicating the position error in the planar direction of the workpiece W placed on the mounting table 14, and [2] a calculating process (step S13 in FIG. 8) of calculating the position of the workpiece W after the correction of, by using the obtained position error information ($\triangle$x, $\triangle$y), the position error in the XY planar direction.

According to this configuration, it becomes possible to additionally correct the position error in the XY planar direction in a state where the inclination error with respect to the XY plane direction is reduced in advance. Thus, a placement error reduction effect is further enhanced and the arrangement operation is simplified. Consequently, it is possible to both improve efficiency of the arrangement operation for placing the workpiece W and maintain machine accuracy.

The error information obtaining unit 53 may further obtain the rotation error information ($\gamma$) indicating the rotation error about the Z axis of the workpiece W placed on the mounting table 14 after the relative positions between the upper guide unit 20 and the lower guide unit 22 are changed. The workpiece position calculating unit 55 may calculate the position of the workpiece W after the correction of, by further using the obtained rotation error information ($\gamma$) (step S14 in FIG. 8), the rotation error about the Z axis. It is possible to perform correction that takes into account the rotation error about the Z axis.

[Modifications]

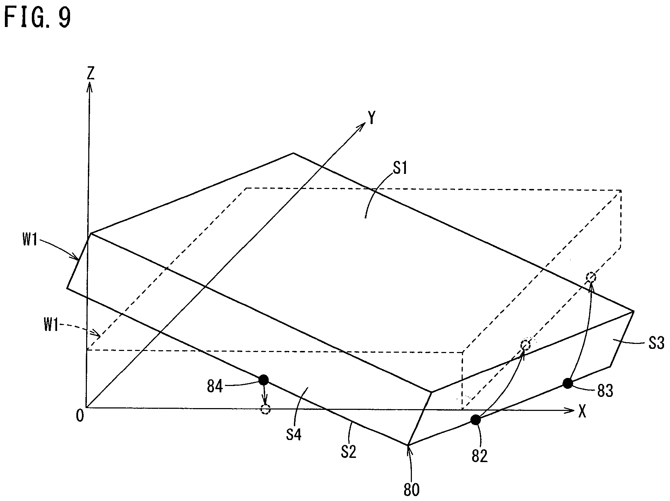

In the above embodiment (e.g., FIG. 7), the positions of the two machining start holes 70, 72 formed on the principal surface of the workpiece W are measured. However, a method for obtaining the position error information and/or the rotation error information is not limited to this example. Two modifications will be described below with reference to FIGS. 9 to 12.

<First Modification>

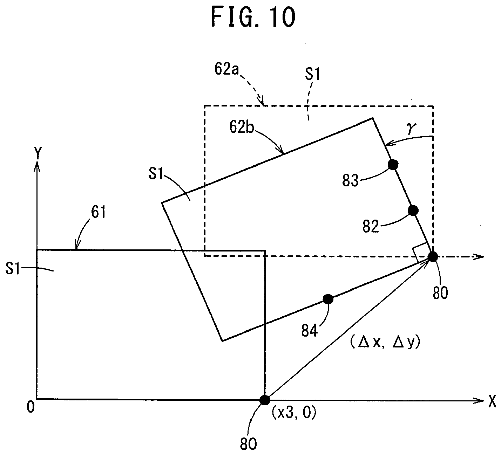

A shape of a workpiece W1 and a measuring method according to the first modification will be described with reference to FIGS. 9 and 10. FIG. 9 is a view showing measurement portions of the workpiece W1 in a measuring process (step S2 in FIG. 6) according to the first modification. FIG. 10 is a view showing a method for calculating a position error in the XY plane and a rotation error about the Z axis.

As shown in FIG. 9, machining start holes are not yet formed in the workpiece W1 of a right-angled parallelepiped shape. The measurement portions are three points on two side surfaces S3, S4 that are adjacent to each other with one corner portion 80 therebetween. More specifically, the measurement portions are [1] a measurement point 82 on the side surface S3, [2] a measurement point 83 on the side surface S3 and [3] a measurement point 84 on the side surface S4. Similar to FIG. 7, the three measurement points 82 to 84 are projected onto positions (expressed by white circles) where the inclination error with respect to the XY plane is not taken into account.

As shown in FIG. 10, a position of the corner portion 80 is given in advance as $(x3, 0)$ on the first virtual workpiece 61. The position of the corner portion 80 on the second virtual workpieces 62a, 62b corresponds to an intersection where a first line that connects the measurement points 82, 83 and a second line that goes through the measurement point 84 cross at a right angle. Consequently, it is possible to obtain the position error information $(\Delta x, \Delta y)$. Since the position of the corner portion 80 on the second virtual workpiece 62b is calculated, it is possible to calculate the rotation angle $\gamma$ based on an angle formed by the first line and the Y axis.

Thus, the error information obtaining unit 53 can calculate and obtain the position error information $(\Delta x, \Delta y)$ and the rotation error information $(\gamma)$ by using the positions of the three measurement points 82 to 84 on the two adjacent side surfaces S3, S4 of the workpiece W1 of the right-angled parallelepiped shape.

<Second Modification>

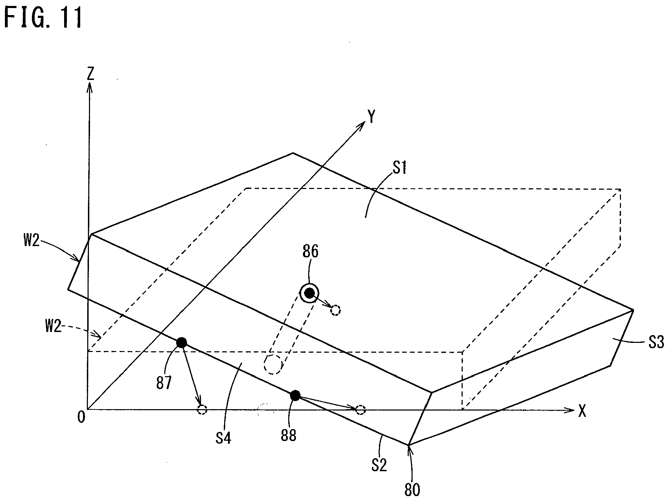

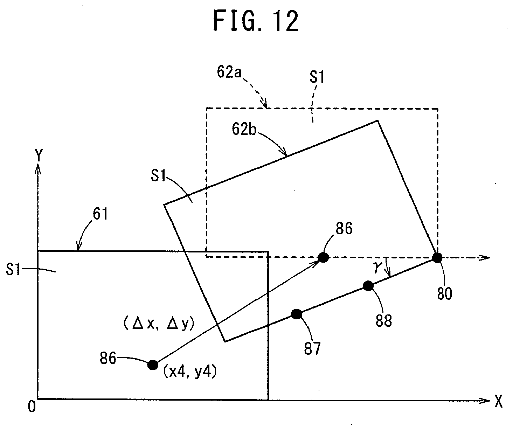

A shape of a workpiece W2 and a measuring method according to the second modification will be described with reference to FIGS. 11 and 12. FIG. 11 is a view showing measurement portions of the workpiece W2 in a measuring process (step S2 in FIG. 6) according to the second modification. FIG. 12 is a view showing a method for calculating a position error in the XY plane and a rotation error about the Z axis.

As shown in FIG. 11, one machining start hole 86 (through-hole) is formed in the workpiece W2 of a right-angled parallelepiped shape. The measurement portions are three portions of [1] a central point of the machining start hole 86, [2] a measurement point 87 on the side surface S4 and [3] a measurement point 88 on the side surface S4. Similar to FIG. 7, the three points of the machining start hole 86 and the measurement points 87, 88 are projected onto positions (expressed by white circles) where the inclination error with respect to the XY plane is not taken into account.

As shown in FIG. 12, the position of the machining start hole 86 is given in advance as $(x4, y4)$ on the first virtual workpiece 61. By calculating a displacement amount of the machining start hole 86, it is possible to obtain the position error information $(\Delta x, \Delta y)$. The position of the corner portion 80 on the second virtual workpieces 62a, 62b corresponds to an intersection of a first line that connects the measurement points 87, 88 and a second line that goes through the machining start hole 86 and is parallel to the X axis. Consequently, it is possible to calculate the rotation angle $\gamma$ about the corner portion 80 based on an angle formed by the first line and the second line (X axis).

Thus, the error information obtaining unit 53 can calculate and obtain the position error information $(\Delta x, \Delta y)$ and the rotation error information $(\gamma)$ by using the two measurement points 87, 88 on one side surface S4 of the workpiece W2 of the right-angled parallelepiped shape, and a position of one point indicating the center of the machining start hole 86 formed on the principal surface of the workpiece W2.

[Notes]

Naturally, the present invention is not limited to the above embodiment and modifications and can be freely changed without departing from the scope of the present invention. Alternatively, each configuration may be arbitrarily combined as long as this combination is not technically contradictory.

For example, in the above embodiment and modifications, both of the position error information and the rotation error information are obtained, and then the position error in the XY plane and the rotation error about the Z axis are simultaneously corrected. However, the present invention is not limited to this configuration. The present invention may employ, for example, a configuration to obtain only the position error information and then correct only the position error in the XY plane or employ a configuration to obtain only the rotation error information and then correct only the rotation error about the Z axis.

**Claims**

1. A wire electrical discharge machine (10) comprising: a mounting table (14) configured to allow a workpiece (W, W1, W2) to be placed on a placement plane (30); and a first guide unit (20) and a second guide unit (22) configured to allow a wire electrode (12) to be stretched therebetween and support the wire electrode (12), wherein the wire electrical discharge machine (10) performs electrical discharge machining on the workpiece (W, W1, W2) in a state where the wire electrode (12) is inclined with respect to the placement plane (30) by changing relative positions between the first guide unit (20) and the second guide unit (22), the wire electrical discharge machine (10) comprising:

   an error information obtaining unit configured to obtain position error information ($\Delta x$, $\Delta y$) indicating a position error in a planar direction (X-Y) of the workpiece (W, W1, W2) placed on the mounting table (14) after the relative positions between the first guide unit (20) and the second guide unit (22) are changed when a three-axis coordinate system formed by the planar direction (X-Y) corresponding to the placement plane (30) and a normal direction (Z) of the placement plane (30) is defined; and
   a workpiece position calculating unit (55) configured to calculate a position of the workpiece (W, W1, W2) after correction of, by using the position error information ($\Delta x$, $\Delta y$) obtained by the error information obtaining unit (53), the position error in the planar direction (X-Y) in a state where the wire electrode (12) is inclined according to an inclined state of the workpiece (W, W1, W2).

2. The wire electrical discharge machine (10) according to claim 1, wherein:

   the error information obtaining unit (53) is configured to further obtain rotation error information ($\gamma$) indicating a rotation error about the normal direction (Z) of the workpiece (W, W1, W2) placed on the mounting table (14) after the relative positions between the first guide unit (20) and the second guide unit (22) are changed; and
   the workpiece position calculating unit (55) is configured to calculate the position of the workpiece (W, W1, W2) with the rotation error about the normal direction (Z) corrected by further using the rotation error position information ($\gamma$) obtained by the error information obtaining unit (53).

3. The wire electrical discharge machine (10) according to claim 2, wherein the error information obtaining unit (53) is configured to calculate and obtain the position error information ($\Delta x$, $\Delta y$) and the rotation error information ($\gamma$) by using positions of three points (82, 83, 84) on two adjacent side surfaces (S3, S4) of the workpiece (W1) of a right-angled parallelepiped shape.

4. The wire electrical discharge machine (10) according to claim 2, wherein the error position obtaining unit (53) is configured to calculate and obtain the position error information ($\Delta x$, $\Delta y$) and the rotation error information ($\gamma$) by using the positions of two points (87, 88) and a position of one point, the two points (87, 88) being on one side surface (S4) of the workpiece (W2) of a right-angled parallelepiped shape and the one point indicating a center of a through-hole (86) formed in a principal surface (S1, S2) of the workpiece (W2).

5. The wire electrical discharge machine (10) according to claim 2, further comprising a correction necessity setting unit (54) configured to set whether or not to correct the position error in the planar direction (X-Y) and the rotation error about the normal direction (Z) according to an input operation of an operator, wherein the workpiece position calculating unit (55) is configured to calculate the position of the workpiece (W, W1, W2) by or without correcting the position of the workpiece (W, W1, W2) according to the setting made by the correction necessity setting unit (54).

6. A wire electrical discharging method of a wire electrical discharge machine (10) comprising: a mounting table (14) configured to allow a workpiece (W, W1, W2) to be placed on a placement plane (30); and a first guide unit (20) and a second guide unit (22) configured to allow a wire electrode (12) to be stretched therebetween and support the wire electrode (12), and configured to perform electrical discharge machining on the workpiece (W, W1, W2) in a state where the wire electrode (12) is inclined with respect to the placement plane (30) by changing relative positions between the first guide unit (20) and the second guide unit (22), the wire electrical discharging method comprising:

an obtaining step of obtaining position error information ($\Delta$x, $\Delta$y) indicating a position error in a planar direction (X-Y) in the workpiece (W, W1, W2) placed on the mounting table (14) after the relative positions between the first guide unit (20) and the second guide unit (22) are changed when a three-axis coordinate system formed by the planar direction (X-Y) corresponding to the placement plane (30) and a normal direction (Z) of the placement plane (30) is defined; and

a calculating step of calculating a position of the workpiece (W, W1, W2) with the corrected position error in the planar direction (X-Y) in a state where the wire electrode (12) is inclined according to an inclined state of the workpiece (W, W1, W2) by using the obtained position error information ($\Delta$x, $\Delta$y).

7. The wire electrical discharging method according to claim 6, wherein:

in the obtaining step, rotation error information ($\gamma$) is further obtained, the rotation error information ($\gamma$) indicating a rotation error about the normal direction (Z) in the workpiece (W, W1, W2) placed on the mounting table (14) after the relative positions between the first guide unit (20) and the second guide unit (22) are changed; and

in the calculating step, the position of the workpiece (W, W1, W2) with the corrected rotation error about the normal direction (Z) is calculated by further using the obtained rotation error position information ($\gamma$).

8. The wire electrical discharging method according to claim 7, wherein, in the obtaining step, the position error information ($\Delta$x, $\Delta$y) and the rotation error information ($\gamma$) are calculated and obtained by using positions of three points (82, 83, 84) on two adjacent side surfaces (S3, S4) of the workpiece (W1) of a right-angled parallelepiped shape.

9. The wire electrical discharging method according to claim 7, wherein, in the obtaining step, the position error information ($\Delta$x, $\Delta$y) and the rotation error information ($\gamma$) are calculated and obtained by using the positions of two points (87, 88) and a position of one point, the two points (87, 88) being on one side surface (S4) of the workpiece (W2) of a right-angled parallelepiped shape and the one point indicating a center of a through-hole (86) formed in a principal surface (S1, S2) of the workpiece (W2).

10. The wire electrical discharging method according to claim 7, further comprising a setting step of setting whether or not to correct the position error in the planar direction (X-Y) and the rotation error about the normal direction (Z) according to an input operation of an operator,

wherein, in the calculating step, the position of the workpiece (W, W1, W2) is calculated by or without correcting the position of the workpiece (W, W1, W2) according to the setting made in the setting step.

FIG. 1

Z
↑
|
→ Y (V)
/
X (U)

10

16 WIRE SUPPLY UNIT

18

20

36

38

S1

12
44
46

30

34

14

30

32

S2

14

22

42

40

24

26 WIRE WINDING UNIT

48 OPERATION PANEL

28

CONTROL DEVICE

| SEQUENCE EXECUTION UNIT ~50 | GUIDE POSITION CALCULATING UNIT ~51 | CORRECTION DATA STORAGE UNIT ~52 |
| ERROR INFORMATION OBTAINING UNIT ~53 | CORRECTION NECESSITY SETTING UNIT ~54 | WORK POSITION CALCULATING UNIT ~55 |

W

EP 3 281 735 A1

FIG. 2

FIG. 3

# FIG. 4

# FIG. 5

# FIG. 6

START

CORRECT INCLINATION ERROR IN
WITH RESPECT TO XY PLANE  — S1

MEASURE WORKPIECE  — S2

CALCULATE AND OBTAIN POSITION
ERROR IN XY PLANE  — S3

STORE POSITION ERROR  — S4

CALCULATE AND OBTAIN ROTATION
ERROR AROUND ABOUT Z AXIS  — S5

STORE ROTATION ERROR  — S6

END

FIG. 7

EP 3 281 735 A1

# FIG. 8

```
                    ( START )
                       │
          ┌────────────┤
          │    ┌────────┴────────────────┐
          │    │ INTERPOLATION PROCESSING │ S11
          │    │  (SPECIFY MACHINING POINT)│
          │    └────────┬─────────────────┘
          │             │
          │    ╱─────────┴──────────────╲  S12  OFF
          │   ╱ CORRECT WORKPIECE PLACEMENT╲──────┐
          │   ╲ ERROR CORRECTION SETTING   ╱      │
          │    ╲─────────┬──────────────╱         │
          │             │ ON                      │
          │    ┌────────┴────────────────┐ S13    │
          │    │    CORRECT IN-XY-PLANE    │       │
          │    │    POSITION ERROR IN XY   │       │
          │    │ PLANE INOF MACHINING POINT│       │
          │    └────────┬────────────────┘        │
          │             │                          │
          │    ┌────────┴────────────────┐ S14    │
          │    │   CORRECT ABOUT-X-AXIS    │       │
          │    │   ROTATION ERROR AROUND   │       │
          │    │ Z AXIS INOF MACHINING POINT│      │
          │    └────────┬────────────────┘        │
          │             │◄─────────────────────────┘
          │    ┌────────┴────────────────┐ S15
          │    │   CALCULATE POSITIONS OF  │
          │    │   UPPER AND LOWER GUIDES  │
          │    │WITH RESPECT TO MACHINING POINT│
          │    └────────┬────────────────┘
          │             │
          │    ╱─────────┴──────────────╲  S16  OFF
          │   ╱ CORRECT WORKPIECE PLACEMENT╲──────┐
          │   ╲ ERROR CORRECTION SETTING   ╱      │
          │    ╲─────────┬──────────────╱         │
          │             │ ON                      │
          │    ┌────────┴────────────────┐ S17    │
          │    │   CORRECT INCLINATION ERROR│      │
          │    │  IN WITH RESPECT TO XY PLANE│     │
          │    └────────┬────────────────┘        │
          │             │◄─────────────────────────┘
          │    ┌────────┴────────────────┐ S18
          │    │  DRIVE MOTOR ACCORDING TO │
          │    │   POSITIONS OF UPPER AND  │
          │    │       LOWER GUIDES        │
          │    └────────┬────────────────┘
          │   NO        │
          └────╱────────┴──────────────╲ S19
              ╲ FINISH MACHINING PROGRAM ╱
               ╲──────────┬────────────╱
                          │ YES
                     ( END )
```

EP 3 281 735 A1

FIG. 9

# FIG. 10

FIG. 11

# FIG. 12

FIG. 13A

FIG. 13C

FIG. 13B

FIG. 13D

EP 3 281 735 A1

Europäisches
Patentamt

European
Patent Office

Office européen
des brevets

# EUROPEAN SEARCH REPORT

Application Number

EP 17 00 1264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2006/102596 A1 (KINOSHITA MITSUO [JP] ET AL) 18 May 2006 (2006-05-18) | 1-5 | INV. B23H7/02 B23H7/20 G05B19/401 |
| Y | * abstract * | 6-10 | |
| Y | JP S61 236428 A (AMADA CO LTD) 21 October 1986 (1986-10-21) * abstract; figure 4 * | 6-10 | |
| A | US 2013/282328 A1 (SATO RYUTA [JP] ET AL) 24 October 2013 (2013-10-24) * paragraphs [0106], [0107] * | 1,6 | |
| A | JP S60 85830 A (FANUC LTD) 15 May 1985 (1985-05-15) * abstract * | 6 | |

TECHNICAL FIELDS
SEARCHED       (IPC)

B23H
G05B

The present search report has been drawn up for all claims

| Place of search | Date of completion of the search | Examiner |
|---|---|---|
| The Hague | 8 January 2018 | Jaeger, Hein |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 281 735 A1

**ANNEX TO THE EUROPEAN SEARCH REPORT
ON EUROPEAN PATENT APPLICATION NO.**

EP 17 00 1264

08-01-2018

| Patent document cited in search report | | | Publication date | Patent family member(s) | | | Publication date |
|---|---|---|---|---|---|---|---|
| US 2006102596 | A1 | | 18-05-2006 | EP | 1657016 | A2 | 17-05-2006 |
| | | | | JP | 2006159396 | A | 22-06-2006 |
| | | | | US | 2006102596 | A1 | 18-05-2006 |
| JP S61236428 | A | | 21-10-1986 | NONE | | | |
| US 2013282328 | A1 | | 24-10-2013 | CN | 103328154 | A | 25-09-2013 |
| | | | | DE | 112011104760 | T5 | 19-12-2013 |
| | | | | JP | 4959028 | B1 | 20-06-2012 |
| | | | | JP | WO2012101742 | A1 | 30-06-2014 |
| | | | | US | 2013282328 | A1 | 24-10-2013 |
| | | | | WO | 2012101742 | A1 | 02-08-2012 |
| JP S6085830 | A | | 15-05-1985 | JP | H0349690 | B2 | 30-07-1991 |
| | | | | JP | S6085830 | A | 15-05-1985 |

**REFERENCES CITED IN THE DESCRIPTION**

**Patent documents cited in the description**

- JP 2006159396 A